# FASCICULE DE BREVET EUROPEEN

(11) **EP 3 672 359 B1**
(45) Date de publication et mention de la délivrance du brevet: **19.07.2023**
(21) Numéro de dépôt: 19214908.6
(22) Date de dépôt: 10.12.2019
(51) Int. Cl.: H04W 88/10, H04L 12/54, H04W 88/16

(54) **EQUIPEMENT ELECTRIQUE QUI ACCEDE, DANS UN MODE DE FONCTIONNEMENT ALTERNATIF, A UN RESEAU DE TELEPHONIE MOBILE, PROCÉDÉ, PROGRAMME D'ORDINATEUR ET MOYENS DE STOCKAGE**
ELEKTRISCHES GERÄT, DAS IM ALTERNATIVEN BETRIEB AUF EIN MOBILTELEFONNETZ ZUGREIFT, VERFAHREN, COMPUTERPROGRAMMPRODUKT UND SPEICHERUNGSVORRICHTUNG
ELECTRICAL EQUIPMENT THAT ACCESSES, IN AN ALTERNATING OPERATING MODE, A MOBILE TELEPHONE NETWORK, METHOD, COMPUTER PROGRAM PRODUCT AND STORAGE MEANS

(30) Priorité: 20.12.2018 FR 1873682
(43) Date de publication de la demande: 24.06.2020
(73) Titulaire: SAGEMCOM BROADBAND SAS, 92500 Rueil-Malmaison (FR)
(72) Inventeur: GENTILI, Fabio, 92500 RUEIL MALMAISON (FR)
(74) Mandataire: Lavaud, Thomas

(56) Documents cités:
- WO-A1-2010/133051
- CN-A- 106 603 354
- US-A1- 2002 087 868
- N Leymann: "GRE Tunnel Bonding", , 9 octobre 2015 (2015-10-09), pages 1-39, XP055538743, Extrait de l'Internet: URL:https://tools.ietf.org/pdf/draft-zhang -gre-tunnel-bonding-01.pdf [extrait le 2019-01-07]

## Description

L'invention concerne le domaine des équipements électriques qui accèdent, dans un mode de fonctionnement alternatif, à un réseau de téléphonie mobile.

### ARRIERE PLAN DE L'INVENTION

Un téléphone mobile accueille très classiquement une carte SIM (pour *Subscriber Identity Module*) destinée à identifier l'utilisateur du téléphone mobile dans un réseau de téléphonie mobile. Le téléphone mobile adapte ainsi son usage aux conditions souscrites par l'utilisateur auprès de l'opérateur en charge du réseau de téléphonie mobile.

Le téléphone mobile est prévu pour accéder au réseau de téléphonie mobile lorsqu'il se trouve dans un mode de fonctionnement nominal.

Certains équipements électriques sont prévus pour accéder à un réseau de téléphonie mobile non pas lorsqu'ils fonctionnent selon un mode de fonctionnement nominal, mais uniquement lorsqu'ils fonctionnent selon un mode de fonctionnement alternatif distinct du mode de fonctionnement nominal.

Ainsi, on connaît des passerelles résidentielles qui sont dotées d'une double interface de communication WAN/xDSL (WAN pour *Worldwide Area Network* et DSL pour *Digital Subscriber Line*) et 4G. Dans certaines de ces passerelles résidentielles, la fonctionnalité de communication avec le réseau de téléphonie mobile 4G est utilisée de façon intermittente et temporaire pour pallier une défaillance du réseau xDSL. Le réseau de téléphonie mobile est alors utilisé pour permettre à la passerelle résidentielle d'accéder au réseau Internet au travers de la liaison de données supportée par le réseau de téléphonie mobile.

Une telle passerelle résidentielle fonctionne donc selon un mode de fonctionnement nominal, dans lequel la passerelle résidentielle accède au réseau xDSL et n'accède pas au réseau de téléphonie mobile, et selon un mode de fonctionnement alternatif ou de secours, dans lequel la passerelle résidentielle accède au réseau de téléphonie mobile.

Cette passerelle résidentielle comporte classiquement un processeur central qui gère le fonctionnement de la passerelle résidentielle, un module de communication dédié aux communications avec le réseau de téléphonie mobile et, bien sûr, un dispositif d'accueil d'une carte SIM et un détecteur de présence de la carte SIM dans le dispositif d'accueil. Le processeur central, notamment, active et désactive le module de communication lorsque cela est nécessaire.

Le document WO 2010/133051 A1 décrit un procédé permettant l'auto-adaptation de cartes de données sans fil de différents modes. Le dispositif de communication, qui comporte au moins deux procédures de branchement correspondant à des cartes de données sans fil de différents modes, détecte le mode de la carte de données sans fil.

### OBJET DE L'INVENTION

L'invention a pour objet de réduire de manière importante la consommation électrique d'un équipement électrique qui accède, dans un mode de fonctionnement alternatif, à un réseau de téléphonie mobile.

### RESUME DE L'INVENTION

L'invention est définie par les revendications indépendantes 1, 7, 9 et 10.

En vue de la réalisation de ce but, on propose un équipement électrique agencé pour fonctionner selon un mode de fonctionnement nominal, dans lequel l'équipement

électrique n'accède pas à un réseau de téléphonie mobile, et selon un mode de fonctionnement alternatif, dans lequel l'équipement électrique accède au réseau de téléphonie mobile, l'équipement électrique comportant un composant de traitement central agencé pour gérer le fonctionnement de l'équipement électrique, un dispositif d'accueil d'une carte SIM, un détecteur de présence de la carte SIM dans le dispositif d'accueil, et un module de communication dédié aux communications avec le réseau de téléphonie mobile et relié au dispositif d'accueil, le composant de traitement central étant agencé notamment pour activer et désactiver le module de communication, l'équipement électrique étant caractérisé en ce que le composant de traitement central comprend une entrée de détection reliée à une sortie du détecteur de présence, de sorte que le composant de traitement central est agencé pour déterminer si la carte SIM est positionnée ou non dans le dispositif d'accueil sans activer le module de communication, l'équipement électrique étant agencé pour être connecté au réseau Internet via une interface de type WAN/xDSL lorsqu'il se trouve dans le mode de fonctionnement nominal, le mode de fonctionnement alternatif étant un mode de secours dans lequel se trouve l'équipement électrique lorsque la connexion au réseau Internet via l'interface de type WAN/xDSL est défaillante.

L'équipement électrique (par exemple une passerelle résidentielle) comprend donc un composant de traitement central (par exemple un processeur) qui gère le fonctionnement de l'équipement électrique et qui, notamment, active le module de communication lorsque son utilisation est nécessaire.

Le composant de traitement central active ainsi le module de communication lorsque l'équipement électrique se trouve dans des conditions nécessitant la mise en oeuvre du mode de fonctionnement alternatif. Pour assurer que le mode de fonctionnement alternatif est bien disponible, il convient de vérifier régulièrement qu'une carte SIM est bien présente dans l'équipement électrique.

Dans un équipement électrique classique de l'art antérieur, seul le module de communication est relié au détecteur de présence de la carte SIM dans le dispositif d'accueil, de sorte que, pour vérifier que la carte SIM est bien présente, le composant de traitement central doit activer régulièrement le module de communication.

Le composant de traitement central de l'équipement électrique selon l'invention, quant à lui, est relié directement au détecteur de présence, de sorte que le composant de traitement central est en mesure de déterminer si une carte SIM est présente ou non sans activer le module de communication, et donc sans que celui-ci ne soit alimenté.

Or, la consommation électrique du module de communication est relativement élevée. L'équipement électrique selon l'invention, dans lequel le module de communication n'a pas besoin d'être activé pour déterminer si la carte SIM est présente ou non, présente donc une consommation électrique nettement réduite par rapport à un équipement électrique de l'art antérieur.

On propose de plus un procédé de communication mis en oeuvre dans un composant de traitement central de l'équipement électrique qui vient d'être décrit, comprenant les étapes de :
- faire fonctionner l'équipement électrique selon un mode de fonctionnement nominal, dans lequel l'équipement électrique n'accède pas à un réseau de téléphonie mobile, et selon un mode de fonctionnement alternatif, dans lequel l'équipement électrique accède au réseau de téléphonie mobile;
- connecter l'équipement électrique au réseau Internet via une interface de type WAN/xDSL lorsqu'il se trouve dans le mode de fonctionnement nominal, le mode de fonctionnement alternatif étant un mode de secours dans lequel se trouve l'équipement électrique lorsque la connexion au réseau Internet via l'interface de type WAN/xDSL est défaillante ;
- acquérir un signal de détection sur l'entrée de détection du composant de traitement central ;
- déterminer, à partir du signal de détection et sans activer le module de communication, si la carte SIM est présente ou non dans le dispositif d'accueil ;
- si la carte SIM est absente, produire un premier message d'alerte à destination de l'utilisateur.

On propose en outre un programme d'ordinateur comprenant des instructions pour mettre en oeuvre, par un composant de traitement central d'un équipement électrique, le procédé de communication qui vient d'être décrit.

On propose aussi des moyens de stockage, caractérisés en ce qu'ils stockent un programme d'ordinateur comprenant des instructions pour mettre en oeuvre, par un composant de traitement central d'un équipement électrique, le procédé de communication qui vient d'être décrit.

L'invention sera mieux comprise à la lumière de la description qui suit d'un mode de mise en œuvre particulier non limitatif de l'invention.

### BREVE DESCRIPTION DES DESSINS

Il sera fait référence aux dessins annexés, parmi lesquels :
[Fig. 1] la figure 1 représente un schéma d'un équipement électrique selon l'invention ;
[Fig. 2] la figure 2 représente des étapes de détection d'un procédé de communication mis en oeuvre par l'équipement électrique selon l'invention ;
[Fig. 3] la figure 3 représente des étapes de vérification du procédé de communication.

### DESCRIPTION DETAILLEE DE L'INVENTION

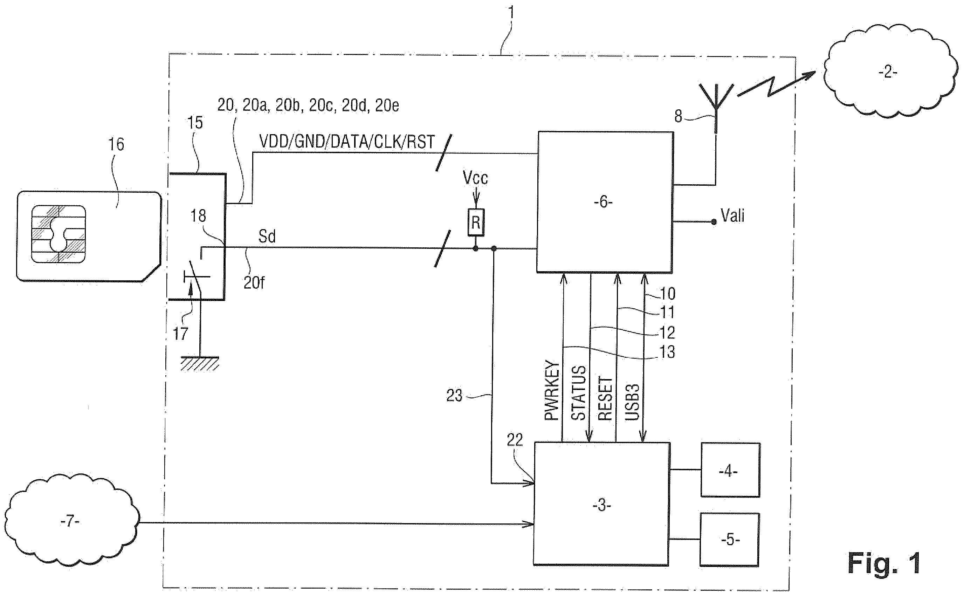

En référence à la figure 1, l'invention est ici mise en oeuvre dans une passerelle résidentielle 1.

La passerelle résidentielle 1 peut fonctionner selon un mode de fonctionnement nominal, dans lequel la passerelle résidentielle 1 n'accède pas à un réseau de téléphonie mobile 2, et selon un mode de fonctionnement alternatif, dans lequel la passerelle résidentielle 1 accède au réseau de téléphonie mobile 2.

Dans le mode de fonctionnement nominal, la passerelle résidentielle 1 est reliée au réseau Internet 7 via une interface WAN/xDSL. Dans le mode de fonctionnement alternatif, la passerelle résidentielle 1 est reliée au réseau de téléphonie mobile 2, qui est par exemple un réseau 4G, 5G, LTE, etc.

Le mode de fonctionnement alternatif est un mode de secours dans lequel se trouve la passerelle résidentielle 1 lorsque la connexion au réseau Internet 7 via l'interface WAN/xDSL est défaillante. Par « défaillante », on entend que la connexion est complètement interrompue, coupée, ou bien n'est pas suffisamment performante pour permettre à la passerelle résidentielle 1 de fonctionner de manière optimale. Ainsi, dans le mode de fonctionnement alternatif, le réseau de téléphonie mobile 2 est utilisé pour pallier une défaillance totale de la connexion au réseau Internet 7 via l'interface WAN/xDSL, mais aussi pour améliorer le fonctionnement de la passerelle résidentielle 1 en combinant les débits du réseau Internet 7 via l'interface WAN/xDSL et du réseau de téléphonie mobile 2.

Le mode de fonctionnement alternatif est utilisé de manière temporaire, intermittente, typiquement quelques fois par mois, pendant quelques heures à chaque fois.

La passerelle résidentielle 1 comporte un composant de traitement central 3 agencé pour gérer le fonctionnement de la passerelle résidentielle 1. Par « gérer le fonctionnement », on entend que le composant de traitement central 3 n'est pas dédié à une seule fonction, mais est en charge de piloter la totalité ou une pluralité de sous-systèmes distincts de la passerelle résidentielle 1, chaque sous-système distinct étant dédié à une ou plusieurs fonctions distinctes.

Le composant de traitement central 3 est par exemple un *SoC* (pour *System on a Chip*) de référence BCM63138 fabriqué par l'entreprise BROADCOM. Le *SoC* intègre un processeur et est chargé de mettre en œuvre toutes les fonctionnalités de la passerelle résidentielle 1, incluant l'accès au réseau Internet via l'interface WAN/xDSL. Pour cela, il exécute dans un espace de mémoire vive 4 de type DDR des instructions stockées dans une mémoire 5 de type NAND FLASH. Le composant de traitement central 3 est adapté à exécuter des instructions d'un programme pour mettre en oeuvre le procédé de communication qui sera décrit plus bas.

La passerelle résidentielle 1 comporte de plus un module de communication 6 dédié aux communications avec le réseau de téléphonie mobile 2.

Le module de communication 6 est par exemple un module intégré de référence Quectel EG06 fabriqué par l'entreprise QUECTEL.

Le module de communication 6 est connecté à une antenne 8 de la passerelle résidentielle 1 pour transmettre et recevoir des données grâce au réseau de téléphonie mobile 2.

Le module de communication 6 est alimenté par une source d'alimentation partagée Vali de la passerelle résidentielle 1, qui est utilisée par ailleurs pour alimenter d'autres sous-systèmes de la passerelle résidentielle 1.

Le composant de traitement central 3 et le module de communication 6 sont reliés entre eux par quatre conducteurs 10, 11, 12, 13.

Le conducteur 10 forme le support physique d'un bus de communication de type USB3 permettant l'échange de données et de commandes entre le composant de traitement central 3 et le module de communication 6 (dans les deux sens).

Le composant de traitement central 3 peut envoyer un signal RESET au module de communication 6 sur le conducteur 11, qui permet au composant de traitement central 3 de redémarrer le module de communication 6 en cas de problème.

Le module de communication 6 transmet un signal STATUS sur le conducteur 12, permettant au composant de traitement central 3 de connaître la disponibilité du module de communication 6 pour traiter des informations.

Le composant de traitement central 3 transmet un signal PWRKEY sur le conducteur 13, permettant au composant de traitement central 3 de commander la mise sous tension et l'extinction du module de communication 6.

Ainsi, le module de communication 6 est alimenté en permanence par la source d'alimentation partagée Vali de la passerelle résidentielle 1, et le composant de traitement central 3 peut activer ou désactiver le module de communication 6 grâce au signal PWRKEY.

On note qu'alternativement, l'alimentation du module de communication 6 pourrait être une source d'alimentation spécifique, dédiée au module de communication 6, et pilotée par le composant de traitement central 3. Le composant de traitement central 3 activerait et désactiverait alors le module de communication 6 en pilotant la source d'alimentation spécifique. Une combinaison des deux solutions (source d'alimentation spécifique et signal PWRKEY) est aussi envisageable.

La passerelle résidentielle 1 comporte de plus un dispositif d'accueil 15 d'une carte SIM 16. La carte SIM 16 de l'utilisateur est ici conforme à la norme 3GPP TS 21.111. Le dispositif d'accueil 15 comprend un socle spécifique dans lequel doit être insérée la carte SIM 16.

Le dispositif d'accueil 15 comprend un détecteur de présence 17 de la carte SIM 16 dans le dispositif d'accueil 15. Le détecteur de présence 17 est ici un contacteur qui produit sur sa sortie 18 un signal de détection Sd qui est un signal logique. Lorsque le détecteur de présence 17 détecte l'absence de la carte SIM 16, le signal de détection Sd est un niveau logique égal à 1 (niveau haut). Lorsque le détecteur de présence 17 détecte la présence de la carte SIM 16 dans le dispositif d'accueil 15, le signal de détection Sd est un niveau logique égal à 0 (état bas).

Une résistance R de *pull-up* est reliée à la sortie 18 du détecteur de présence 17. La résistance R a une valeur de résistance de 10kQ. La résistance R a une première borne sur laquelle est appliquée une tension d'alimentation Vcc et une deuxième borne reliée à la sortie 18.

Le dispositif d'accueil 15 comprend un socle spécifique relié au module de communication 6 par six conducteurs 20 sur lesquels sont appliqués des signaux normalisés.

Un signal VDD d'alimentation de la carte SIM 16 est appliqué sur le conducteur 20a. Un signal GND de masse est appliqué sur le conducteur 20b. Un signal RST de redémarrage de la carte SIM peut être transmis par le module de communication 6 sur le conducteur 20c. Des signaux DATA peuvent être échangés sur le conducteur 20d selon un échange bidirectionnel de données entre la carte SIM 16 et le module de communication 6. Des signaux CLK formant une horloge de synchronisation des données sont transmis par le module de communication 6 sur le conducteur 20e.

La sortie 18 du détecteur de présence 17 de la carte SIM 16 est reliée au module de communication 6 via le conducteur 20f. Le module de communication 6 reçoit ainsi le signal de détection Sd.

Ainsi, lorsque le composant de traitement central 3 décide que la passerelle résidentielle 1 doit fonctionner selon le mode de fonctionnement alternatif, et donc lorsque le composant de traitement central 3 souhaite activer la fonctionnalité de communication avec le réseau de téléphone mobile 2, le composant de traitement central 3 génère une impulsion sur le conducteur 13 (signal PWRKEY), ce qui a pour effet de mettre sous tension le module de communication 6.

Au travers du signal STATUS et du bus USB3, le composant de traitement central 3 établit un dialogue avec le module de communication 6 ayant pour but, notamment, de déterminer le réseau de téléphonie mobile 2 de l'opérateur. Cette opération peut nécessiter la transmission d'informations de contrôle de sécurité liées à la carte SIM 16 (code PIN par exemple).

Au travers du signal STATUS et du bus USB3, le composant de traitement central 3 active la communication avec un équipement distant au travers du réseau 4G.

Lorsque la passerelle résidentielle 1 se trouve dans le mode de fonctionnement nominal, il est nécessaire de vérifier régulièrement la présence d'une carte SIM 16 dans le dispositif d'accueil 15, de manière à vérifier la disponibilité du mode de fonctionnement alternatif dans le cas où celui-ci deviendrait nécessaire.

A cet effet, le composant de traitement central 3 comprend une entrée de détection 22 qui est reliée directement, via le conducteur 23, à la sortie 18 du détecteur de présence 17.

Le composant de traitement central 3 peut donc déterminer si la carte SIM 16 est positionnée ou non dans le dispositif d'accueil 15 sans activer le module de communication 6 : lorsque le signal de détection Sd, appliqué sur l'entrée de détection 22, est un niveau logique égal à 1, le composant de traitement central 3 détecte l'absence de la carte SIM 16, et lorsque le signal de détection Sd est un niveau logique égal à 0, le composant de traitement central 3 détecte la présence de la carte SIM 16.

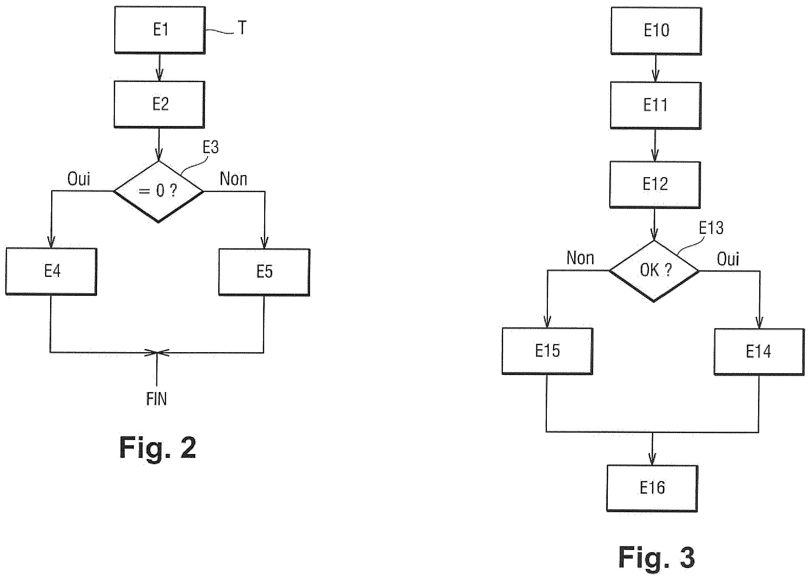

Ainsi, en référence à la figure 2, lorsque la passerelle résidentielle 1 se trouve dans le mode de fonctionnement nominal, le composant de traitement central 3 acquiert le signal de détection Sd appliqué sur son entrée de détection 22 (étape E1).

L'acquisition est faite ici cycliquement, à intervalles réguliers, par exemple toutes les cinq secondes. Les instants d'acquisition sont déterminés grâce à un *timer* T.

L'acquisition pourrait aussi être faite de manière déclenchée, par exemple lors de la transition du signal de détection Sd depuis un niveau reflétant l'absence vers un niveau reflétant la présence de la carte SIM 16, ou inversement (on parle alors de détection par interruption) .

Le composant de traitement central 3 lit le signal de détection Sd (étape E2) et évalue si le signal de détection Sd est égal à 0 ou à 1 (étape E3).

Si le signal de détection Sd est égal à 0, le composant de traitement central 3 en déduit que la carte SIM 16 est présente dans le dispositif d'accueil 15 (étape E4).

Si le signal de détection est un niveau logique égal à 1, le composant de traitement central 3 en déduit que la carte SIM 16 est absente et donc que le mode de fonctionnement alternatif n'est pas disponible (étape E5). Le composant de traitement central 3 produit alors un premier signal d'alerte à destination d'un utilisateur de la passerelle résidentielle 1.

Le premier signal d'alerte a pour but d'informer l'utilisateur que la carte SIM 16 est absente, c'est-à-dire qu'aucune carte SIM 16 n'a été introduite dans le dispositif d'accueil 15 ou bien que la carte SIM 16 a été retirée, et donc que le mode de fonctionnement alternatif n'est pas disponible : une éventuelle future défaillance de la connexion au réseau Internet via l'interface WAN/xDSL ne pourra pas être palliée par une connexion au réseau de téléphonie mobile 2.

Le premier signal d'alerte est par exemple une indication visuelle apparaissant sur la passerelle résidentielle 1 (par exemple sur un écran ou un voyant de la passerelle résidentielle 1). Le premier signal d'alerte peut aussi être un signal sonore produit par la passerelle résidentielle 1. Le premier signal d'alerte peut aussi être généré dans l'interface de gestion WEB de la passerelle résidentielle 1. Un message de type SMS ou mail peut aussi être envoyé.

Cependant, la détection de la présence de la carte SIM 16 ne signifie pas nécessairement que la connexion au réseau de téléphonie mobile 2 est possible, et donc que le mode de fonctionnement alternatif est disponible.

En effet, on pourrait imaginer qu'une carte SIM 16 soit introduite dans le dispositif d'accueil 15, mais que la connexion avec le réseau de téléphonie mobile 2 ne soit pas possible, par exemple si la carte SIM 16 est détériorée, ou bien si la carte SIM 16 est inadaptée au réseau de téléphone mobile 2 de l'opérateur fournissant la fonction du mode de fonctionnement alternatif, ou bien si le réseau de téléphone mobile 2 est indisponible à cause d'un problème de couverture, ou bien encore pour toute autre cause.

Ainsi, avantageusement, suite aux étapes de détection de la carte SIM 16, visibles sur la figure 2, on met en oeuvre des étapes de vérification de la disponibilité du mode de fonctionnement alternatif, visibles sur la figure 3.

Ces étapes de vérification ont pour but, lorsque le composant de traitement central 3 détecte qu'une carte SIM 16 vient d'être insérée dans le dispositif d'accueil 15, de vérifier que la liaison avec le réseau de téléphonie mobile 2 est fonctionnelle.

Le composant de traitement central 3 tente pour cela d'établir une connexion réelle avec le réseau de téléphonie mobile 2.

Ainsi, en référence à la figure 3, lorsque le composant de traitement central 3 a détecté qu'une carte SIM 16 vient d'être insérée dans le dispositif d'accueil 15 (étape E10), le composant de traitement central 3 active le module de communication 6 en le mettant sous tension (étape E11) pour effectuer une tentative de connexion avec le réseau de téléphonie mobile 2 (étape E12).

Le composant de traitement central 3 évalue si la tentative de connexion aboutit (étape E13).

Si la tentative de connexion aboutit, le composant de traitement central 3 confirme que le mode de fonctionnement alternatif est disponible (étape E14).

Sinon, le composant de traitement central 3 en déduit que le mode de fonctionnement alternatif n'est pas disponible (étape E15).

Le composant de traitement central 3 produit dans ce cas un deuxième signal d'alerte à destination de l'utilisateur. Le deuxième signal d'alerte peut être semblable ou non au premier signal d'alerte.

Le composant de traitement central 3 désactive alors le module de communication 6 en le mettant hors tension grâce au signal PWRKEY (ou en coupant la source d'alimentation spécifique du module de communication 6 - étape E16).

L'insertion d'une nouvelle carte SIM 16 entraîne à nouveau la mise en oeuvre des étapes qui viennent d'être décrites (étapes de détection et de vérification).

On note que les étapes de vérification de la disponibilité du réseau de téléphonie mobile 2 ne nécessitent que quelques secondes de mise sous tension après la détection d'insertion de la carte SIM 3. Ainsi, le module de communication 6 est bien activé et alimenté, mais pendant une durée très courte, de sorte que ces étapes de vérification nécessitent une consommation d'énergie électrique très faible.

Bien entendu, l'invention n'est pas limitée au mode de réalisation décrit mais englobe toute variante entrant dans le champ de l'invention telle que définie par les revendications.

L'architecture et les composants utilisés dans la passerelle résidentielle peuvent bien sûr être différents de ceux décrits ici. En particulier, le composant de traitement central pourrait comprendre un FPGA, un microcontrôleur, etc.

L'invention peut être mise en oeuvre dans tout équipement électrique susceptible de fonctionner selon un mode de fonctionnement nominal, dans lequel l'équipement électrique n'accède pas à un réseau de téléphonie mobile, et selon un mode de fonctionnement alternatif, dans lequel l'équipement électrique accède au réseau de téléphonie mobile. Un tel équipement électrique est par exemple un équipement de communication intégré dans un véhicule connecté, un boîtier décodeur, une enceinte connectée, un compteur électrique, etc.

## Revendications

1. Equipement électrique agencé pour fonctionner selon un mode de fonctionnement nominal, dans lequel l'équipement électrique (1) n'accède pas à un réseau de téléphonie mobile (2), et selon un mode de fonctionnement alternatif, dans lequel l'équipement électrique accède au réseau de téléphonie mobile (2), l'équipement électrique comportant un composant de traitement central (3) agencé pour gérer le fonctionnement de l'équipement électrique, un dispositif d'accueil (15) d'une carte SIM (16), un détecteur de présence (17) de la carte SIM dans le dispositif d'accueil, et un module de communication (6) dédié aux communications avec le réseau de téléphonie mobile et relié au dispositif d'accueil (15), le composant de traitement central (3) étant agencé notamment pour activer et désactiver le module de communication (6), l'équipement électrique étant **caractérisé en ce que** le composant de traitement central (3) comprend une entrée de détection (22) reliée au détecteur de présence (17), de sorte que le composant de traitement central (3) est agencé pour déterminer si la carte SIM (16) est positionnée ou non dans le dispositif d'accueil (15) sans activer le module de communication (6), l'équipement électrique (1) étant agencé pour être connecté au réseau Internet via une interface de type WAN/xDSL lorsqu'il se trouve dans le mode de fonctionnement nominal, le mode de fonctionnement alternatif étant un mode de secours dans lequel se trouve l'équipement électrique (1) lorsque la connexion au réseau Internet via l'interface de type WAN/xDSL est défaillante.

2. Equipement électrique selon la revendication 1, dans lequel le composant de traitement central (3) est agencé pour acquérir un signal de détection (Sd) appliqué sur son entrée de détection (22), et, si le signal de détection (Sd) est représentatif d'une absence de la carte SIM dans le dispositif d'accueil, pour produire un premier signal d'alerte à destination d'un utilisateur de l'équipement électrique (1).

3. Equipement électrique selon la revendication 1, dans lequel le composant de traitement central (3) est agencé pour, lorsqu'il détecte qu'une carte SIM (16) vient d'être insérée dans le dispositif d'accueil, activer le module de communication (6) pour effectuer une tentative de connexion avec le réseau de téléphonie mobile (2).

4. Equipement électrique selon la revendication 3, dans lequel le composant de traitement central (3) est agencé pour, si la tentative de connexion aboutit, confirmer que le mode de fonctionnement alternatif est disponible.

5. Equipement électrique selon la revendication 3, dans lequel le composant de traitement central (3) est agencé pour, si la tentative de connexion n'aboutit pas, produire un deuxième signal d'alerte à destination de l'utilisateur.

6. Equipement électrique selon l'une des revendications précédentes, l'équipement électrique étant une passerelle résidentielle.

7. Procédé de communication mis en oeuvre dans un composant de traitement central (3) d'un équipement électrique (1) selon l'une des revendications précédentes, comprenant les étapes de :
- faire fonctionner l'équipement électrique (1) selon un mode de fonctionnement nominal, dans lequel l'équipement électrique (1) n'accède pas à un réseau de téléphonie mobile (2), et selon un mode de fonctionnement alternatif, dans lequel l'équipement électrique accède au réseau de téléphonie mobile (2) ;
- connecter l'équipement électrique (1) au réseau Internet via une interface de type WAN/xDSL lorsqu'il se trouve dans le mode de fonctionnement nominal, le mode de fonctionnement alternatif étant un mode de secours dans lequel se trouve l'équipement électrique (1) lorsque la connexion au réseau Internet via l'interface de type WAN/xDSL est défaillante ;
- acquérir un signal de détection (Sd) sur l'entrée de détection (22) du composant de traitement central ;
- déterminer, à partir du signal de détection et sans activer le module de communication, si la carte SIM (16) est présente ou non dans le dispositif d'accueil (15) ;
- si la carte SIM est absente, produire un premier message d'alerte à destination d'un utilisateur de l'équipement électrique.

8. Procédé de communication selon la revendication 7, comprenant en outre les étapes, lorsque la présence de la carte SIM dans le dispositif d'accueil a été détectée, de
- activer le module de communication (6) ;
- effectuer une tentative de connexion avec le réseau de téléphonie mobile (2) ;
- si la tentative de connexion aboutit, confirmer la disponibilité du mode de fonctionnement alternatif ;
- si la tentative de connexion n'aboutit pas, produire un deuxième signal d'alerte à destination de l'utilisateur ;
- désactiver le module de communication (6).

9. Programme d'ordinateur comprenant des instructions pour mettre en oeuvre, par un composant de traitement central d'un équipement électrique, un procédé de communication selon l'une des revendications 7 ou 8.

10. Moyens de stockage, **caractérisés en ce qu'**ils stockent un programme d'ordinateur comprenant des instructions pour mettre en oeuvre, par un composant de traitement central d'un équipement électrique, un procédé de communication selon l'une des revendications 7 ou 8.

## Patentansprüche

1. Elektrisches Gerät, das ausgebildet ist, in einem nominalen Betriebsmodus zu arbeiten, in dem das elektrische Gerät (1) nicht auf ein Mobilfunknetz (2) zugreift, sowie in einem alternativen Betriebsmodus, in dem das elektrische Gerät auf das Mobilfunknetz (2) zugreift, wobei das elektrische Gerät eine zentrale Verarbeitungskomponente (3) umfasst, die ausgebildet ist, den Betrieb des elektrischen Geräts zu verwalten, eine Aufnahmevorrichtung (15) zur Aufnahme einer SIM-Karte (16), einen Präsenzdetektor (17) zum Erfassen des Vorhandenseins der SIM-Karte in der Aufnahmevorrichtung und ein Kommunikationsmodul (6), das für Kommunikationen mit dem Mobilfunknetz bestimmt und mit der Aufnahmevorrichtung (15) verbunden ist, wobei die zentrale Verarbeitungskomponente (3) insbesondere ausgebildet ist, das Kommunikationsmodul (6) zu aktivieren und zu deaktivieren, wobei das elektrische Gerät **dadurch gekennzeichnet ist, dass** die zentrale Verarbeitungskomponente (3) einen Detektionseingang (22) umfasst, der mit dem Präsenzdetektor (17) verbunden ist, derart, dass die zentrale Verarbeitungskomponente (3) ausgebildet ist, zu bestimmen, ob die SIM-Karte (16) in der Aufnahmevorrichtung (15) positioniert ist oder nicht, ohne das Kommunikationsmodul (6) zu aktivieren, wobei das elektrische Gerät (1) ausgebildet ist, mit dem Internet über eine Schnittstelle vom Typ WAN/xDSL verbunden zu werden, wenn es sich im nominalen Betriebsmodus befindet, wobei der alternative Betriebsmodus ein Notfallmodus ist, in dem sich das elektrische Gerät (1) befindet, wenn die Verbindung mit dem Internet über die Schnittstelle vom Typ WAN/xDSL gestört ist.

2. Elektrisches Gerät nach Anspruch 1, bei dem die zentrale Verarbeitungskomponente (3) ausgebildet ist, ein Detektionssignal (Sd) zu erfassen, das an ihrem Detektionseingang (22) angelegt ist, und, wenn das Detektionssignal (Sd) repräsentativ für ein Nichtvorhandensein der SIM-Karte in der Aufnahmevorrichtung ist, ein erstes Warnsignal, das für einen Benutzer des elektrischen Geräts (1) bestimmt ist, zu erzeugen.

3. Elektrisches Gerät nach Anspruch 1, bei dem die zentrale Verarbeitungskomponente (3) ausgebildet ist, um, wenn sie erfasst, dass eine SIM-Karte (16) soeben in die Aufnahmevorrichtung eingeführt wurde, das Kommunikationsmodul (6) zu aktivieren, um einen Verbindungsversuch mit dem Mobilfunknetz (2) durchzuführen.

4. Elektrisches Gerät nach Anspruch 3, bei dem die zentrale Verarbeitungskomponente (3) ausgebildet ist, um, wenn der Verbindungsversuch erfolgreich ist, zu bestätigen, dass der alternative Betriebsmodus zur Verfügung steht.

5. Elektrisches Gerät nach Anspruch 3, bei dem die zentrale Verarbeitungskomponente (3) ausgebildet ist, um, wenn der Verbindungsversuch nicht erfolgreich ist, ein zweites Alarmsignal, das für den Benutzer bestimmt ist, zu erzeugen.

6. Elektrisches Gerät nach einem der vorhergehenden Ansprüche, wobei das elektrische Gerät ein Residential Gateway ist.

7. Kommunikationsverfahren, das in einer zentralen Verarbeitungskomponente (3) eines elektrischen Geräts (1) nach einem der vorhergehenden Ansprüche durchgeführt wird, umfassend die Schritte:
- Veranlassen, dass das elektrische Gerät (1) in einem nominalen Betriebsmodus arbeitet, in dem das elektrische Gerät (1) nicht auf ein Mobilfunknetz (2) zugreift, sowie in einem alternativen Betriebsmodus, in dem das elektrische Gerät auf das Mobilfunknetz (2) zugreift;
- Verbinden des elektrischen Geräts (1) mit dem Internet über eine Schnittstelle vom Typ WAN/xDSL, wenn es sich im nominalen Betriebsmodus befindet, wobei der alternative Betriebsmodus ein Notfallmodus ist, in dem sich das elektrische Gerät (1) befindet, wenn die Verbindung zum Internet über die Schnittstelle vom Typ WAN/xDSL gestört ist;
- Erfassen eines Detektionssignals (Sd) am Detektionseingang (22) der zentralen Verarbeitungskomponente;
- Bestimmen anhand des Detektionssignals und ohne Aktivierung des Kommunikationsmoduls, ob die SIM-Karte (16) in der Aufnahmevorrichtung (15) vorhanden ist oder nicht;
- wenn die SIM-Karte fehlt, Erzeugen einer ersten Warnmeldung, die für einen Benutzer des elektrischen Geräts bestimmt ist.

8. Kommunikationsverfahren nach Anspruch 7, ferner umfassend die Schritte, wenn das Vorhandensein der SIM-Karte in der Aufnahmevorrichtung erfasst worden ist:
- Aktivieren des Kommunikationsmoduls (6);
- Durchführen eines Verbindungsversuchs mit dem Mobilfunknetz (2);
- wenn der Verbindungsversuch erfolgreich ist, Bestätigen der Verfügbarkeit des alternativen Betriebsmodus;
- wenn der Verbindungsversuch nicht erfolgreich ist, Erzeugen eines zweiten Alarmsignals, das für den Benutzer bestimmt ist;
- Deaktivieren des Kommunikationsmoduls (6).

9. Computerprogramm, umfassend Anweisungen zum Durchführen eines Kommunikationsverfahrens nach einem der Ansprüche 7 oder 8 mittels einer zentralen Verarbeitungskomponente eines elektrischen Geräts.

10. Speichermittel, **dadurch gekennzeichnet, dass** sie ein Computerprogramm speichern, das Anweisungen zum Durchführen eines Kommunikationsverfahrens nach einem der Ansprüche 7 oder 8 mittels einer zentralen Verarbeitungskomponente eines elektrischen Geräts umfasst.

## Claims

1. Electrical device designed to operate in a nominal operating mode in which the electrical device (1) does not access a mobile telephony network (2), and in an alternative operating mode in which the electrical device accesses the mobile telephony network (2), the electrical device having a central processing component (3) designed to manage the operation of the electrical device, a reception device (15) for receiving a SIM card (16), a presence detector (17) for detecting the presence of the SIM card in the reception device, and a communication module (6) dedicated to communications with the mobile telephony network and linked to the reception device (15), the central processing component (3) being designed in particular to activate and deactivate the communication module (6), the electrical device being **characterized in that** the central processing component (3) comprises a detection input (22) linked to the presence detector (17), such that the central processing component (3) is designed to determine whether or not the SIM card (16) is positioned in the reception device (15) without activating the communication module (6), the electrical device (1) being designed to be connected to the Internet via an interface of the WAN/xDSL type when it is in the nominal operating mode, the alternative mode being a backup mode that the electrical device (1) adopts when the connection to the Internet via the interface of the WAN/xDSL type is defective.

2. Electrical device according to Claim 1, wherein the central processing component (3) is designed to acquire a detection signal (Sd) applied to its detection input (22) and, if the detection signal (Sd) is representative of absence of the SIM card in the reception device, to produce a first alert signal intended for a user of the electrical device (1).

3. Electrical device according to Claim 1, wherein the central processing component (3) is designed, when it detects that a SIM card (16) has just been inserted into the reception device, to activate the communication module (6) in order to make an attempt to connect to the mobile telephony network (2).

4. Electrical device according to Claim 3, wherein the central processing component (3) is designed, if the connection attempt succeeds, to confirm that the alternative operating mode is available.

5. Electrical device according to Claim 3, wherein the central processing component (3) is designed, if the connection attempt does not succeed, to produce a second alert signal intended for the user.

6. Electrical device according to one of the preceding claims, the electrical device being a home gateway.

7. Communication method implemented in a central processing component (3) of an electrical device (1) according to one of the preceding claims, comprising the steps of:
- operating in a nominal operating mode in which the electrical device (1) does not access a mobile telephony network (2), and in an alternative operating mode in which the electrical device accesses the mobile telephony network (2) ;
- connecting the electrical device (1) to the Internet via an interface of the WAN/xDSL type when it is in the nominal operating mode, the alternative mode being a backup mode that the electrical device (1) adopts when the connection to the Internet via the interface of the WAN/xDSL type is defective
- acquiring a detection signal (Sd) on the detection input (22) of the central processing component;
- determining, from the detection signal and without activating the communication module, whether or not the SIM card (16) is present in the reception device (15);
- if the SIM card is absent, producing a first alert message intended for a user of the electrical device.

8. Communication method according to Claim 7, furthermore comprising the steps, when the presence of the SIM card in the reception device has been detected, of:
- activating the communication module (6);
- making an attempt to connect to the mobile telephony network (2);
- if the connection attempt succeeds, confirming the availability of the alternative operating mode;
- if the connection attempt does not succeed, producing a second alert signal intended for the user;
- deactivating the communication module (6).

9. Computer program comprising instructions for a central processing component of an electrical device to implement a communication method according to either of Claims 7 and 8.

10. Storage means, **characterized in that** they store a computer program comprising instructions for a central processing component of an electrical device to implement a communication method according to either of Claims 7 and 8.
